# EUROPÄISCHE PATENTSCHRIFT

(11) **EP 2 258 179 B1**
(45) Veröffentlichungstag und Bekanntmachung des Hinweises auf die Patenterteilung: **18.07.2012**
(21) Anmeldenummer: 10177899.1
(22) Anmeldetag: 22.04.2005
(51) Int. Cl.: A01N 25/30, A01N 37/18, A01N 43/88

(54) **Verwendung von Alkylcarbonsäureamiden als Penetrationsförderer**
Use of alkykl carboxylic acid amides as penetration promoters
Utilisation de carboxamides en tant qu'agents favorisant la pénétration

(30) Priorität: 27.04.2004 DE 102004020840
(43) Veröffentlichungstag der Anmeldung: 08.12.2010
(62) Teilanmeldung aus: 05732349.5
(73) Patentinhaber: Bayer CropScience AG, 40789 Monheim am Rhein (DE)
(72) Erfinder: Röchling, Andreas, 40764 Langenfeld (DE); Reizlein, Karl, 40789 Monheim (DE); Baur, Peter, 86938 Schondorf (DE)

(56) Entgegenhaltungen:
- EP-A- 0 757 891
- WO-A-88/02216
- WO-A-94/13140
- WO-A-03/099005
- WO-A2-03/034822
- US-A- 5 741 502

## Beschreibung

Die Erfindung betrifft die Verwendung von n-Octansäuredimethylamid und/oder n-Decansäuredimethylamid in Pflanzenschutzmitteln und Pflanzenschutzmittel, die solche Verbindungen enthalten.

Aus der EP-A 0 453 899 ist die Verwendung von C₅-C₁₉-Alkylcarbonsäuredimethylamiden als Kristallisationsinhibitoren für bestimmte zur Kristallisation neigende Azolfungizide, wie Tebuconazole, bekannt.

WO03/09900 beschreibt Formulierungen, die unter anderem Penetrationsförderer und mindestens einen agrochemischen Wirkstoff enthalten, wobei Fluoxastrobin genannt ist.

Es wurde nun überraschend gefunden, dass sich n-Octansäuredimethylamid und/oder n-Decansäuredimethylamid zur Erhöhung der Penetration von Fluoxastrobin durch die Kutikula der Pflanze und damit zur biologischen Wirkungssteigerung von Pflanzenschutzmitteln eignen.

Gegenstand der Erfindung ist daher die Verwendung von n-Octansäuredimethylamid und/oder n-Decansäuredimethylamid zur Förderung der Penetration von Fluoxastrobin in Pflanzen.

n-Octansäuredimethylamid und/oder n-Decansäuredimethylamid werden einzeln oder in Form von Gemischen eingesetzt.

n-Octansäuredimethylamid und/oder n-Decansäuredimethylamid sind bekannt und kommerziell erhältlich.

Die Menge an n-Octansäuredimethylamid und/oder n-Decansäuredimethylamid bei der erfindungsgemäßen Verwendung in Pflanzenschutzmitteln kann nach Wirkstoff und Formulierungstyp in weiten Grenzen variieren.

So dienen n-Octansäuredimethylamid und/oder n-Decansäuredimethylamid in einer bevorzugten Ausführungsform zusätzlich als Lösungsmittel, in einer anderen, ebenfalls bevorzugten Ausführungsform, als Additive zur Verbesserung der biologischen Wirksamkeit. Außerdem ist auch die Anwendung als Tank-Mix-Additiv, d.h. das Zusetzen zur Spritzbrühe der Formulierung und nicht als integrierter Bestandteil der Formulierung, möglich, sowie die Verwendung der Formulierung als Mischpartner zur Verbesserung der biologischen Wirksamkeit anderer Mittel durch Penetrationssteigerung.

Bevorzugt haben erfindungsgemäße Pflanzenschutzmittel, d.h. Pflanzenschutzmittel, die erfindungsgemäß n-Octansäuredimethylamid und/oder n-Decansäuredimethylamid zur Erhöhung der Penetration des Wirkstoffs in Pflanzen enthalten, folgende Zusammensetzung:
- 1 bis 90 %, besonders bevorzugt 5 bis 50 %, an dem agrochemischen Wirkstoff Fluoxastrobin,
- 1 bis 90 %, besonders bevorzugt 5 bis 70 %, an n-Octansäuredimethylamid und/oder n-Decansäuredimethylamid und
- 0 bis 98 % sonstige Zusatzstoffe.

Dienen n-Octansäuredimethylamid und/oder n-Decansäuredimethylamid nicht als Lösungsmittel, sondern als reine Aditive zur Förderung der Penetration von Wirkstoffen in Pflanzen, sind sie bevorzugt in einem Anteil von 1 bis 30%. besonders bevorzugt von 5 bis 20 %. insbesondere von 5 bis 10%, in den erfindungsgemäßen Pflanzenschutzmitteln vorhanden.

Agrochemischen Wirkstoff ist das Strobilurin-Fungizid

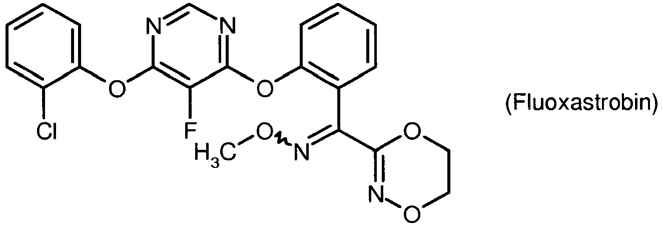

Zu den in Frage kommenden Formulierungstypen gehören alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, "Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag. Weinheim, 2000.

Beispiele für Formulierungstypen sind alle die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AB Grain bait; AE Aerosol dispenser; AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; DT Tablet for direct application; EC Emulsifiable concentrate; ED Electrochargeable liquid; EG Emulsifiable Granule; EO Emulsion, water in oil; EP emulsifiable powder, ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD oil dispersion, OF Oil miscible flowable concentrate/oil miscible suspension; OL Oil miscible liquid; OP Oil dispersible powder; PA Paste; PC Gel or paste concentrate; PO Pour-on; PR Plant rodlet; PS Seed coated with a pesticide; PT Pellet; RB Bait (ready for use); SA Spot-on; SC suspension concentrate, SD suspension concentrate for direct application, SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; VP Vapour releasing product; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen DC (GCPF-Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize), FS (GCPF-Formulierungskode für Mehrphasenkonzentrat zur Saatgutbehandlung), EO (GCPF-Formulierungskode für Wasser in Öl Emulsion; ME (GCPF-Formulierungskode für Mikroemulsion; SE (GCPF-Formulierungskode für Suspo-emulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Emulsionskonzentrate (Formulierungstyp EC ).

Als Zusatzstoffe, die in den erfindungsgemäßen, vorzugsweise flüssige Formulierungen enthalten sein können, kommen alle üblichen Formulierhilfsmittel in Frage, wie organische Solventien. Entschäumer, Emulgatoren, Dispergiermittel, Konservierungsmittel, Säuren und Basen, Farbstoffe. Füllstoffe und auch Wasser.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80^{®}.

Als organische Solventien kommen neben Alkancarbonsäureamiden, wie denen der Formel (I), alle üblichen organischen Lösungsmittel in Betracht. welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso^{®}, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, Lactate ferner Lactone, wie Butyrolacton, außerdem Lactame, wie N-Methylpyrrolidon, N-Octylpyrrolidon, N-Dodecylpyrrolidon, N-Octylcaprolactam und N-Methylcaprolactam,, y-Butyrolacton, Dimethylformamid sowie Tributylphosphat.

Bevorzugt sind Carbonsäureamide der Formel (I). Besonders bevorzugt sind n-Octansäuredimethylamid und n-Decansäuredimethylamid sowie deren Mischungen.

Als Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Endgruppen-verschlossene und nicht Endgruppen-verschlossene alkoxylierte lineare und verzweigte, gesättigte und ungesättigte Fettsäuren, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristrylphenol-alkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen.

Als Dispergiermittel kommen alle üblicherweise in Pflanzenschutzmitteln für diesen Zweck eingesetzten Substanzen in Betracht. Vorzugsweise genannt seien neben den oben unter Emulgatoren genannten Beispielen natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol^{®} und Proxel^{®}.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Der Gehalt an den einzelnen Komponenten kann in den erfindungsgemäßen Formulierungen innerhalb eines größeren Bereichs variiert werden.

Die Herstellung der erfindungsgemäßen Formulierungen erfolgt z.B. in der Weise, dass man die Komponenten in den jeweils gewünschten Verhältnissen miteinander vermischt. Handelt es sich bei dem agrochemischen Wirkstoff um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemische Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man die Säureamide (I) mit einem oder mehreren Wirkstoffen sowie gegebenenfalls mit Zusatzstoffen vermischt. Die Reihenfolge, in der die Komponenten miteinander vermischt werden, ist beliebig.

Zur Durchführung des erfindungsgemäßen Verfahrens kommen übliche Geräte in Betracht, die zur Herstellung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der Pflanzenschutzmittel unterschiedlichster Formulierungstypen zur Bekämpfung der genannten Schadorganisinen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen agrochemischen Formulierungen können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen agrochemischen Formulierungen kann innerhalb eines größeren Bereiches variiert werden. Sie richtet sich nach den jeweiligen agrochemischen Wirkstoffen und nach deren Gehalt in den Formulierungen.

Weiterhin Gegenstand der Erfindung ist ein Verfahren zur Förderung der Penetration agrochemische Wirkstoffe in Pflanzen, wobei man den agrochemischen Wirkstoff gleichzeitig oder sequentiell mit einem oder mehreren Säureamide der Formel (I) auf die Pflanze aufbringt.

Die Pflanzenschutzmittel gemäß der Erfindung sind teilweise bekannt und teilweise neu.

Gegenstand der Erfindung ist auch ein Pflanzenschutzmittel, enthaltend
a) 1 bis 80% an n-Octansäuredimethylamid und/oder n-Decansäuredimethylamid
b) 1 bis 90% an dem agrochemischen Wirkstoff Fluoxastrobin und
c) 0 bis 98% an Zusatzstoffen.

Gegenstand der Erfindung ist auch ein Pflanzenschutzmittel, enthaltend
a) 1 bis 30 %, vorzugsweise 5 bis 20 %, besonders bevorzugt 5 bis 10 %, an n-Octansäuredimethylamid und/oder n-Decansäuredimethylamid
b) 1 bis 90 % an dem agrochemischen Wirkstoff Fluoxastrobin und
c) 0 bis 98 % an Zusatzstoffen.

Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen. Hafer, Hirse, Reis, Maniok und Mais. oder auch Kulturen von Erdnuss, Zuckerrübe, Baumwolle, Soja. Raps. Kartoffel, Tomate, Erbse und anderen Gemüsesorten bevorzugt.

Die Erfindung wird durch die Beispiele näher erläutert ohne sie darauf zu beschränken.

### Beispiele

### Penetrationstest

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µl einer Spritzbrühe der in den Beispielen genannten Zusammensetzung auf die Außenseite einer Kutikula appliziert.

In den Spritzbrühen wurde jeweils CIPAC-Wasser verwendet.

Nach dem Auftragen der Spritzbrühen ließ man jeweils das Wasser verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 25°C statt. Die Wirkstoffpenetration wurde mit radioaktiv markiertem Wirkstoff gemessen.

Wie anhand der in der Tabelle aufgeführten Beispiele zu erkennen ist, führt die Anwesenheit von Säureamiden (hier als Beispiel Decansäuredimethylamid) zu einer beträchtlichen Aufnahmesteigerung gegenüber den Formulierungen, bei denen die Säureamide nicht vorhanden sind. Bei den eingesetzten Alternativen zum Säureamid handelt es sich um Beispiele von handelsüblichen Lösungsmitteln für Formulierungen.

### Tabelle, Beispiel 1: (Vergleichsbeispiel, nicht unter den Umfang der Erfindung fallend)

Der Wirkstoff wird in einem Aceton / Wasser-Gemisch mit einer Konzentration von 0,5 g/l gelöst und die Penetration nach 3 und 48 Stunden gemessen.

### Tabelle, Beispiel 2: (Vergleichsbeispiel nicht unter den Umfang der Erfindung fallend)

Der Wirkstoff wird zusammen mit Formulierhilfsmitteln und Decansäuredimethylamid vermischt und diese Mischung mit Wasser verdünnt, so dass die Verdünnung auch wieder eine Wirkstoffkonzentration von 0,5 g/l enthält. Wie in Bsp. 1 wurde dann die Penetration nach 3 und 48 Stunden gemessen.

### Tabelle, Beispiel 3: (Vergleichsbeispiel nicht unter den Umfang der Erfindung fallend)

Der Wirkstoff wird zusammen mit Formulierhilfsmitteln und N-Methyl-pyrrolidone vermischt und diese Mischung mit Wasser verdünnt, so dass die Verdünnung eine Wirkstoffkonzentration von 0,5 g/l enthält. Die Penetration wurde nach 3 und 48 Stunden gemessen.

### Tabelle, Beispiel 4: (Vergleichsbeispiel nicht unter den Umfang der Erfindung fallend)

Der Wirkstoff wird zusammen mit Formulierhilfsmitteln und γ-Butyrolactone vermischt und diese Mischung mit Wasser verdünnt, so dass die Verdünnung eine Wirkstoffkonzentration von 0,5 g/l enthält. Die Penetration wurde nach 3 und 48 Stunden gemessen.

### Tabelle, Beispiel 5: (Vergleichsbeispiel nicht unter den Umfang der Erfindung fallend)

Der Wirkstoff wird zusammen mit Formulierhilfsmitteln und Decansäuredimethylamid vermischt (Vergleichsbeispiel, nicht under den Umfang der Erfindung fallend) und diese Mischung mit Wasser verdünnt, so dass die Verdünnung eine Wirkstoffkonzentration von 1,0 g/l enthält. Wie in Bsp. 1 wurde dann die Penetration nach 3 und 48 Stunden gemessen.

### Tabelle. Beispiel 6: (Vergleichsbeispiel, nicht unter den Umfang der Erfindung fallend)

Der Wirkstoff wird zusammen mit Formulierhilfsmitteln und N-Methyl-pyrrolidone vermischt und diese Mischung mit Wasser verdünnt, so dass die Verdünnung eine Wirkstoffkonzentration von 1,0 g/l enthält. Die Penetration wurde nach 3 und 48 Stunden gemessen.

### Tabelle, Beispiel 7: (Vergleichsbeispiel, nicht unter den Umfang der Erfindung fallend)

Der Wirkstoff wird zusammen mit Formulierhilfsmitteln und γ-Butyrolactone vermischt und diese Mischung mit Wasser verdünnt, so dass die Verdünnung eine Wirkstoffkonzentration von 1,0 g/l enthält. Die Penetration wurde nach 3 und 48 Stunden gemessen.

### Tabelle, Beispiel 8: (Vergleichsbeispiel, nicht unter den Umfang der Erfindung fallend)

Die Wirkstoffe Prothioconazole und Tebuconazole werden zusammen mit Formulierhilfsmitteln und Decansäuredimethylamid vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 9: (Vergleichsbeispiel, nicht unter den Umfang der Erfindung fallend)

Die Wirkstoffe Prothioconazole und Tebuconazole werden zusammen mit Formulierhilfsmitteln und N-Methyl-pyrrolidone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 10: (Vergleichsbeispiel, nicht unter den Umfang der Erfindung fallend)

Die Wirkstoffe Prothioconazole und Tebuconazole werden zusammen mit Formulierhilfsmitteln und γ-Butyrolactone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 11: (Vergleichsbeispiel, nicht unter den Umfang der Erfindung fallend)

Die Wirkstoffe Prothioconazole und Spiroxamine werden zusamnen mit Formulierhilfsmitteln und Decansäuredimethylamid vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 12: (Vergleichsbeispiel, nicht unter den Umfang der Erfindung fallend)

Die Wirkstoffe Prothioconazole und Spiroxamine werden zusammen mit Formulierhilfsmitteln und N-Methyl-pyrrolidone vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle, Beispiel 13: (Vergleichsbeispiel, nicht unter den Umfang der Erfindung fallend)

Die Wirkstoffe Prothioconazole und Spiroxamine werden zusammen mit Formulierhilfsmitteln und einem Aromatengemisch (Siedepunkt 220-290 °C) vermischt und diese Mischung mit Wasser verdünnt, so dass die Verdünnung eine Prothioconazole-Konzentration von 0,5 g/l enthält. Die Penetration wurde nach 3 und 48 Stunden gemessen.

### Tabelle Penetrationstest

| Beispiel | Lösungsmittel | Wirkstoffe | Prothioconazole-Konzentration (g/l) in der wässrigen Verdünnung | % Penetration (+/- SE) Prothioconazole | % Penetration (+/- SE) Prothioconazole |
|---|---|---|---|---|---|
| | | | | nach 3 h | nach 48 h |
| | | | | n=5-7 | n=5-7 |
| | | | | | |
| | | | | | |
| 1 | Aceton (ohne weitere Formulierhilfsmittel) | Prothioconazole | 0.5 | 0.23 (0.06) | 0.72 (0.17) |
| | | | | | |
| 2 | Decansäuredimethylamid | Prothioconazole | 0.5 | 1.73 (0.45) | 6.99 (1.23) |
| 3 | N-Methylpyrrolidon | Prothioconazole | 0.5 | 0.16 (0.04) | 2.23 (0.49) |
| 4 | Gamma-Butyrolacton | Prothioconazole | 0.5 | 0.12 (0.04) | 1.4 (0.37) |
| | | | | | |
| 5 | Decansäuredimethylamid | Prothioconazole | 1.0 | 1.24 (0.34) | 6.82 (1.63) |
| 6 | N-Methylpyrrolidon | Prothioconazole | 1.0 | 0.18 (0.03) | 1.57 (0.45) |
| 7 | Gamma-Butyrolacton | Prothioconazole | 1.0 | 0.09 (0.03) | 2.38 (1.29) |
| | | | | | |
| 8 | Decansäuredimethylamid | Prothioconazole & Tebuconazole | 0.5 | 13.13 (1.96) | 38.17 (6.78) |
| 9 | N-Methylpyrrolidon | Prothioconazole & Tebuconazole | 0.5 | 0.74 (0.12) | 13.42 (1.36) |
| 10 | Gamma-Butyrolacton | Prothioconazole & Tebuconazole | 0.5 | 0.67 (0.19) | 13.9 (2.48) |
| | | | | | |
| 11 | Decansäuredimethylamid | Prothioconazole & Spiroxamine | 0.5 | 8.08 (1.01) | 28.69 (3.51) |
| 12 | N-Methylpyrrolidon | Prothioconazole & Spiroxamine | 0.5 | 1.62 (0.28) | 17.79 (3.7) |
| 13 | Aromatengemisch(*1) | Prothioconazole & Spiroxamine | 0.5 | 0.84 (0.3) | 10.15 (4.59) |

| | | | | | |
|---|---|---|---|---|---|
| (∗1): Siedepunkt: 220 - 290 °C | | | | | |

| Beispiel | Testsubstanz (g/l) | Wirkstoffe | Thidiazuron-Konzentration (g/l) in der Verdünnung (Aceton/Wasser. 20/80) | % Penetration Thidiazuron | % Penetration Thidiazuron |
|---|---|---|---|---|---|
| | | | | nach 1-1.5 h | nach 22h |
| | | | | n = 5-7 | n = 5-7 |
| 14 Vergleichsbeispiel, nicht under den unfang der enfindung fallend | Wirkstoff (ohne Testsubstanz) | Thidiazuron | 0.5 | <1 | <1 |
| 15 Vergleichsbeispiel, nicht under den unfang der enfindung fallend | Octan-/Decansäuredimethylamid∗∗(3 g/l) | Thidiazuron | 0.5 | 37.7 | 43.1 |
| 16 Vergleichsbeispiel, nicht under den unfang der enfindung fallend | Hasten∗∗∗ (2 g/l) | Thidiazuron | 0.5 | 8.0 | 27.0 |
| 17 Vergleichsbeispiel, nicht under den unfang der enfindung fallend | Hasten (10 g/l) | Thidiazuron | 0.5 | 12.6 | 39.2 |
| 18 Vergleichsbeispiel, nicht under den unfang der enfindung fallend | Agridex∗∗∗∗ (10 g/l) | Thidiazuron | 0.5 | 1.44 | 46.6 |

| | | | | | |
|---|---|---|---|---|---|
| ∗∗ Hallcomid M8-10 ∗∗∗ Konunerzielles Tankmix-Additiv mit Ethyl/Methylester von Ölsäure als Hauptbestandteil ∗∗∗∗ Kommerzielles Tankmix-Additiv. Mineralölkonzentrat | | | | | |

| Beispiel | Formulierung/Testsubstanz in Spritzbrühe (g/l) | Wirkstoffe | BYF587-Konzentration (g/l) in der wäßrigen Verdünnung | % Penetration BYF587 | % Penetration BYF587 |
|---|---|---|---|---|---|
| | | | | nach 7h | nach 26h |
| | | | | n = 5-7 | n=5-7 |
| 19 Vergleichsbeispiel, nicht under den unfang der enfindung fallend | SC100 | N-(3'4'-Dichlor-5-fluorbiphenyl-2-yl)-3-(difluormethyl)-1-methyl-1H-pyrazol-4-carboxamid | 0.25 | 0.8 | 1.6 |
| 20 Vergleichsbeispiel, nicht under den unfang der enfindung fallend | EC200 Decansäuredimethylamid∗∗(0.5 g/l) | N-(3'4'-Dichlor-5-fluorbiphenyl-2-yl)-3-(difluormethyl)-1-methyl-1H-pyrazol-4-carboxamid | 0.25 | 25.7 | 40.7 |
| 21 Vergleichsbeispiel, nicht under den unfang der enfindung fallend | EC200/Decansäuredimethylamid∗∗(1.5g/l) | N-(3'4'-Dichlor-5-fluorbiphenyl-2-yl)-3-(difluormethyl)-1-methyl-1H-pyrazol-4-carboxamid | 0.25 | 38.9 | 54.3 |

| | | | | | |
|---|---|---|---|---|---|
| ∗∗ Hallcomid M8-1 0 | | | | | |

## Patentansprüche

1. Verwendung von n-Octansäuredimethylamid und/oder n-Docansäuredimethylarnid zur Förderung der Penetration des agrochemischen Wirkstoffs Fluoxastrobin in Pflanzen.

2. Verwendung gemäß Anspruch 1, wobei man n-Octansäuredimethylamid und/oder n-Decansäuredimethylamid in einem Pflanzenschutzmittel, enthaltend
- 1 bis 90%, besonders bevorzugt 5 bis 50%, an dem agrochemischen Wirkstoff Fluoxastrobin,
- 1 bis 90%, besonders bevorzugt 5 bis 70%, an n-Octansäuredimethylamid und/oder n-Decansäuredimethylamid und
- 0 bis 98% an Zusatzstoffen, einsetzt.

3. Verwendung gemäß Anspruch 1 oder 2, wobei n-Octansäuredimethylamid und/oder n-Decansäuredimethylamid einer wässrigen Spritzbrühe zugesetzt werden.

4. Verfahren zur Förderung der Penetration agrochemischer Wirkstoffe in Pflanzen, wobei man den agrochemischen Wirkstoff Fluoxastrobin gleichzeitig oder sequentiell mit n-Octansäuredimethylamid und/oder n-Decansäuredimethylamid auf die Pflanzen aufbringt.

5. Pflanzenschutzmittel, enthaltend
a) 1 bis 80% an n-Octansäuredimethylamid und/oder n-Decansäuredimethytamid,
b) 1 bis 90% an dem agrochemischen Wirkstoff Fluoxastrobin und
c) 0 bis 98% an Zusatzstoffen.

6. Pflanzenschutzmittel gemäß Anspruch 8, enthaltend
a) 1 bis 30% an n-Octansäuredimethylamid und/oder n-Decansäuredimethylamid,
b) 1 bis 90% an dem agrochemischen Wirkstoff und
c) 0 bis 98% an Zusatzstoffen.

## Claims

1. Use of N,N-dimethyl n-octanamide and/or N,N-dimethyl n-decanamide for promoting the penetration of the agrochemical active substance fluoxastrobin into plants.

2. Use according to Claim 1, N,N-dimethyl n-octanamide and/or N,N-dimethyl n-decanamide being employed in a plant protection composition comprising
- 1 to 90%, especially preferably 5 to 50%, of the agrochemical active substance fluoxastrobin,
- 1 to 90%, especially preferably 5 to 70%, of N,N-dimethyl n-octanamide and/or N,N-dimethyl n-decanamide and
- 0 to 98% of additives.

3. Use according to Claim 1 or 2, N,N-dimethyl n-octanamide and/or N,N-dimethyl n-decanamide being added to an aqueous spray mixture.

4. Method of promoting the penetration of agrochemical active substances into plants, where the agrochemical active substance fluoxastrobin is applied to the plants simultaneously or sequentially with N,N-dimethyl n-octanamide and/or N,N-dimethyl n-decanamide.

5. Plant protection composition comprising
a) 1 to 80% of one N,N-dimethyl n-octanamide and/or N,N-dimethyl n-decanamide,
b) 1 to 90% of the agrochemical active substance fluoxastrobin and
c) 0 to 98% of additives.

6. Plant protection composition according to Claim 5 comprising
a) 1 to 30% of N,N-dimethyl n-octanamide and/or N,N-dimethyl n-decanamide,
b) 1 to 90% of the agrochemical active substance and
c) 0 to 98% of additives.

## Revendications

1. Utilisation de diméthylamide de l'acide n-octanoïque et/ou de l'acide n-décanoïque pour favoriser la pénétration de la substance active agro-chimique fluoxastrobine dans les végétaux.

2. Utilisation selon la revendication 1, le diméthylamide de l'acide n-octanoïque et/ou de l'acide n-décanoïque étant utilisé dans un agent de phytoprotection contenant
- 1 à 90%, de manière particulièrement préférée 5 à 50%, de la substance active agro-chimique fluoxastrobine,
- 1 à 90%, de manière particulièrement préférée 5 à 70%, de diméthylamide de l'acide n-octanoïque et/ou de l'acide n-décanoïque et
- 0 à 98% d'additifs.

3. Utilisation selon la revendication 1 ou 2, le diméthylamide de l'acide n-octanoïque et/ou de l'acide n-décanoïque étant ajouté à un bouillon de pulvérisation aqueux.

4. Procédé pour favoriser la pénétration de substances actives agrochimiques dans des végétaux, la substance active agro-chimique fluoxastrobine étant appliquée simultanément ou séquentiellement avec le diméthylamide de l'acide n-octanoïque et/ou de l'acide n-décanoïque sur les végétaux.

5. Agent de phytoprotection, contenant
a) 1 à 80% de diméthylamide de l'acide n-octanoïque et/ou, de l'acide n-décanoïque,
b) 1 à 90% de la substance active agro-chimique fluoxastrobine et
c) 0 à 98% d'additifs.

6. Agent de phytoprotection selon la revendication 5, contenant
a) 1 à 30% de diméthylamide de l'acide n-octanoïque et/ou de l'acide n-décanoïque,
b) 1 à 90% de la substance active agro-chimique fluoxastrobine et
c) 0 à 98% d'additifs.
